# EUROPEAN PATENT APPLICATION

(11) **EP 1 946 656 A1**
(43) Date of publication of application: **23.07.2008**
(21) Application number: 06127064.1
(22) Date of filing: 22.12.2006
(51) Int. Cl.: A23L 1/24, A23C 19/06, A23C 19/02, A23L 1/22, A23L 1/39

(54) **Acidic edible composition comprising cheese chunks and method of manufacturing such composition**

(71) Applicant: UNILEVER N.V., 3013 AL Rotterdam (NL)
(72) Inventor: Ko, Meliana c/o Unilever R&D Vlaardingen B.V., 3133 AT Vlaardingen (NL); Vreeker, Robert c/o Unilever R&D Vlaardingen B.V., 3133 AT Vlaardingen (NL)
(74) Representative: Rosen Jacobson, Frans Lucas M.

(57) **Abstract**

One aspect of the invention relates to an edible composition comprising:
• at least 35 wt.% of an aqueous phase, said aqueous phase having a pH of less than 5.5;
• at least 0.5 wt.% of cheese chunks with a minimum weight of 0.1 g; and
• up to 60 wt.% of one or more additional ingredients; wherein the protein within the cheese chunks has been cross-linked.

These edible compositions offer the advantage that the cheese chunks contained therein retain their desirable eating properties even when stored in direct contact with the acidic aqueous phase under ambient conditions for several months.

The invention also provides a process for the manufacture of the aforementioned edible emulsion.

## Description

### TECHNICAL FIELD OF THE INVENTION

The present invention relates to an acidic edible composition, such as a dressing, which acidic composition comprises chunks of cheese. More particularly, the present invention concerns an edible composition comprising an aqueous phase having a pH of less than 5.5 and at least 0.5 wt.% of cheese chunks with a minimum weight of 0.1 g. Also provided is a method for the manufacture of such a composition.

### BACKGROUND OF THE INVENTION

Cheese is widely used as an ingredient in many food products. In some of these food applications cheese is applied in the form of discrete, identifiable pieces. The application of cheese chunks (pieces) in acidified aqueous food products such as dressings, however, poses a problem, especially if the pH of the product is below 5.5. When cheese is left in contact with an acidic aqueous environment for a prolonged period of time, the cheese looses firmness and/or cohesion, starts to become grainy and/or to separate oil. As a result, storage of natural cheese under acidic conditions inevitably has a detrimental effect on the desirable eating properties of the cheese product.

It is possible to avoid this problem by taking special measures such as those described in US 6,238,717. This US patent describes a process for preparing a packaged cottage cheese product having an increased shelf life, said process comprising:
a. preparing a cottage cheese dressing having 0.05%-0.30% calcium carbonate at a pH of 5.6 to 6.0;
b. preparing a cottage cheese curd at a pH of 4.0 to 4.8;
c. blending the cottage cheese dressing and the cottage cheese curd together to form a cottage cheese product; and
d. packaging the cottage cheese product so that after packaging, the pH of the cottage cheese curd reduces the pH of the cottage cheese product to a range which, during refrigerated storage of the cottage cheese product in the package, will cause the calcium carbonate to slowly be converted to carbonic acid which will then slowly be converted to carbon dioxide sufficient to increase the shelf life and reduce the risk of spoilage of the cottage cheese product compared to cottage cheese not containing calcium carbonate.
The cottage product so obtained is said to have an increased shelf life. In the US patent it is observed that whereas conventional cold cottage cheese has an average shelf life of 20-30 days, the cottage cheese product obtained by the aforementioned process has an average shelf life of 30-40 days or longer at refrigeration temperatures.

An important drawback of the cottage cheese product of US 6,238,717 is that it must be stored in a refrigerator and that even under refrigeration conditions its shelf life is limited. Furthermore, the split stream manufacturing process described in US 6,238,717 is unduly complex.

### SUMMARY OF THE INVENTION

The inventors have found a way to prepare acidified edible compositions containing an aqueous phase having a pH of less than 5.5 and discrete cheese chunks that retain their desirable eating properties even when stored in direct contact with the acidic aqueous phase under ambient conditions for several months. The inventors have achieved this by employing cheese chunks in which the protein has been cross-linked, e.g. by treatment with transglutaminase. The inventors have furthermore found that the edible composition containing these cross-linked cheese chunks exhibits exceptional heat stability, making it possible to pasteurise the edible composition without destroying the eating quality of the cheese chunks.

Although the inventors do not wish to be bound by theory, it is believed that due to the cross-linking of the proteins, the casein network contained within the cheese chunks is less likely to degrade under the prevailing acidic conditions. Furthermore, it is believed that the cross-linked protein network is very effective in retaining the dispersed fat that is contained within the cheese chunks.

It is known in the art of cheese manufacture to employ transglutaminase to increase the cheese production yield, especially by minimising protein losses in the whey stream.

This kind of application is described, for instance, in patent applications US 2005/0123645 and US 2003/0054069.

### DETAILED DESCRIPTION OF THE INVENTION

One aspect of the invention relates to an edible composition comprising:
● at least 35 wt.% of an aqueous phase, said aqueous phase having a pH of less than 5.5;
● at least 0.5 wt.% of cheese chunks with a minimum weight of 0.1 g; and
● up to 60 wt.% of one or more additional ingredients; wherein the protein within the cheese chunks has been cross-linked.

In order to achieve significant acid stability, it is preferred that at least 0.01 of the protein within the cheese chunks is cross-linked. More preferably, at least 0.1%, even more preferably at least 0.5% and most preferably at least 1% is cross-linked. It should be understood that the term "cross-linking" as used herein refers to the introduction of a covalently bonded link between two different protein molecules or between different parts of the same protein molecule.

The degree of cross-linking as referred to herein is defined as the average number of amino acid residues per protein molecule that is conjugated with (covalently bound to) a cross-linking agent. Analytical methods suitable for determining the degree of cross-linking can be found in the relevant scientific literature. Different methods may be applied to determine the degree of cross-linking, depending on the nature of the cross-linking agent. A suitable method for determining the degree of cross-linking is the amino acid analysis described in US 2005/0130261, which is incorporated herein by reference.

Another methodology for determining the degree of cross-linking makes use of LC-MS/MS. Sample preparation includes hydrolysis of the proteinaceous material, e.g. by treatment with 6 mol/L hydrochloric acid at 110 °C for 24 hours. The protein hydrolysate so obtained will essentially consist of single amino acids and amino acids that are linked together by a cross-linking agent. The latter components can easily be identified on the basis of their relatively high molecular mass.

The protein contained within the cheese chunks may suitably have been cross-linked by any method known in the art, provided the cross-linked material can be considered food-grade. The cheese proteins may, for instance, be cross-linked by carbonylic cross-linkers, phenolic cross-linkers and/or enzymatic cross-linkers.

The term "carbonylic cross-linkers" covers cross-linking agents that form covalent bonds with protein residues through a reactive carbonyl group. Preferred carbonylic cross-linkers are ketoses, polyfunctional aldehydic or phenolic cross-linkers. A typical example of a polyfunctional aldehydic cross-linker is glutaraldehyde (pentane-1,5-dial). A typical example of a ketose cross-linker is dihydroxy-acetone (1,3-dihydroxy-2-propanone).

Typical examples of phenolic acid cross-linkers are phenolic acid cross-linkers and polyphenolic cross-linkers. Preferred phenolic acid cross-linkers include chlorogenic acid, caffeic acid, ferulic acid, coumaric acid and mixtures and derivatives thereof. Polyphenolic cross-linkers that can suitably be employed include polyphenols from plant sources such as polyphenols from grapes (e.g. anthocyanidins), coffee, tea, grains, cocoa and chocolate, fruits and berries.

Enzymatic cross-linkers that may suitably be employed include transglutaminases and/or oxidoreductases (e.g. peroxidase, laccase, monoamine oxidase or polyphenol oxidase).

The continuous aqueous phase of the present edible composition advantageously represent 40-98 wt.% of the composition. More preferably, the continuous aqueous phase represents 50-96 wt.% of the edible composition. The cheese chunks are preferably contained in the edible composition in an amount of 3-50 wt.%, more preferably of 4-30 wt.%.

The present invention covers edible compositions that essentially consist of a continuous aqueous phase and the cheese chunks as well as edible compositions that contain additional components, such as oil, spices, herbs, vegetables, meat products etc. Typically, the aqueous phase of the edible composition, the cheese chunks, oil, spices, herbs, vegetables and meat products together represent at least 90 wt.%, more preferably at least 95 wt.% of the total edible composition.

According to a particularly preferred embodiment, the present edible composition is a pourable composition. The term "pourable edible composition" as used herein refers to edible compositions that are readily pourable from a container (e.g. a bottle or a jar) under ambient conditions. Pourable edible compositions, such as dressings, are distinguished from non-pourable compositions, such as mayonnaise. Examples of pourable edible compositions that are encompassed by the present invention include dressings, sauces, soups and condiments. Most preferably, the pourable edible composition is a dressing.

The pourable composition of the present invention advantageously contains a plant material selected from the group consisting of spices, herbs and vegetables. Preferably, in case said plant material are vegetables, the plant material has a mass weighted average diameter of at least 1 mm, more preferably of 2-20 mm. This average diameter is calculated by on the basis of the maximum diameter of each individual particle. According to a particularly preferred embodiment, the present pourable composition contains at least 10 wt.%, preferably at least 20 wt.% of a plant material selected from the group consisting of spices, herbs, vegetables and combinations thereof.

The cheese chunks and other particulate components of the pourable composition preferably sink or remain in suspension during storage of the composition. Most preferably, the composition is designed in such a way that the cheese chunks and any other particulate material contained therein remains in suspension, even if the composition is left under quiescent conditions for one week or more. This may achieved by ensuring that the density of the cheese chunks and other particulate material closely matches the density of the aqueous phase. Typically, the density of the cheese chunks is in the range of 1.0-1.2 g/ml.

The shelf stability of the present edible composition is largely dependent on the pH of the continuous aqueous phase. In order to minimise the risk of microbial spoilage, it is desirable to employ a pH of less than 5.0 or even of less than 4.5. The present invention offers the advantages that these pH's can be employed without any detrimental effect on the quality of the product, even when the product is stored under ambient conditions for several months. For reasons of taste, the pH of the edible compositions preferably does not go below 3.0.

In principle, the cheese chunks contained in the present edible composition may take any shape or form. Preferably, the cheese chunks are cubically or cylindrically shaped. Most preferably, the cheese chunks are cubically shaped. According to another preferred embodiment, the cheese chunks have a weight in the range of 0.2-5g.

The cheese chunks employed in accordance with the present invention preferably have a relatively firm consistency. Accordingly, in a very preferred embodiment, the cheese chunks exhibit a fracture stress of at least 5 kPa, more preferably of at least 10 kPa. Typically, the fracture stress of the cheese chunks does not exceed 350 kPa, preferably it does not exceed 300 kPa.

Furthermore, the cheese chunks advantageously exhibit a fracture strain of at least 10%, more preferably of at least 20%. The fracture strains of the cheese chunks usually does not exceed 70%, more preferably said fracture strain does not exceed 60%. The fracture stress and fracture strain of the cheese chunks are determined at 20 °C using a Texture Analyser (model TA.XTPLUS, Stable Micro Systems, UK). The cheese chunks are cubically shaped (15x15x15 mm³) and compressed uniaxially between two flat plates at a rate of 50 mm/min. The resulting stress-strain curve is used to calculate (true) strain and (true) stress at fracture (see e.g.: M.H. Tunick, Rheology of dairy foods that gel, stretch and fracture, J.Dairy Sci. 83, 2000, pp.1892-1898).

The present invention encompasses the use of chunks of a variety of cheeses. According to another preferred embodiment, the cheese chunks are made of a cheese selected from the group consisting of fetta cheese, Parmesan, Romano, Mozzarella, Emmenthaler, Gouda, processed cheese and combinations thereof.

According to yet another preferred embodiment, the continuous aqueous phase of the composition is transparent. Thus, in case the edible composition is packaged in a transparent container, the cheese chunks are visible to the naked eye. Preferably, the transparency of the continuous aqueous phase is reflected in a transmission of at least 70%, more preferably of at least 80%. The transmission as referred to in here is determined by using an Uvikon XL photo-spectrometer (Setomam, Domont Cedex, France) at room temperature. The aqueous phase of the dressing is pipetted into a cuvette of thickness 1 cm and transmission equals the maximum transmission that is measured within a wavelength range of 400-750 nm.

The edible composition of the present invention, besides the acidic continuous aqueous phase and the cheese chunks, may suitably contain additional components. Thus, for instance, the composition may suitably contain some fat. Preferably, the composition comprises 0-5 wt.% of a dispersed fat phase. The inclusion of a dispersed fat phase usually produces a milky opaque appearance. As explained, in accordance with a preferred embodiment, when packaged in a transparent container (e.g. 1 litre of edible composition in a glass jar with a diameter of 8 cm), the cheese chunks should be visible to the naked eye. Thus, according to a very preferred embodiment, the edible composition contains less than 0.5 wt.% of a dispersed fat phase.

It is preferred not to expose the cheese chunks to elevated temperatures during the preparation of the present edible composition. Hence, in accordance with a very advantageous embodiment, the complete edible composition has not been pasteurised or heat sterilised. It should be understood, however, that parts of the edible composition excluding the cheese chunks may have been subjected to pasteurisation or heat sterilisation prior to being combined with the cheese chunks.

Another aspect of the present invention relates to a process for the manufacture of an edible composition as defined herein before, said process comprising the steps of:
● combining cheese milk with tranglutaminase;
● curdling the transglutaminase containing cheese milk;
● removing the curd;
● producing a cheese product from the removed curd;
● dividing the cheese product into cheese chunks;
● combining the cheese chunks with an aqueous composition and, if the pH of the resulting product is 5.5 or higher, adjusting the pH to less than 5.5; and packaging the resulting edible composition in a sealed container.

In order to achieve sufficient stabilising effect from the cross-linking, the transglutaminase should be allowed sufficient time to achieve a substantial level of cross-linking. Accordingly, in a preferred embodiment, the time period between the addition of the transglutaminase and the removal of the curd exceeds 30 minutes. Even more preferably the latter time period exceeds 50 minutes. Naturally, the time needed for achieving adequate cross-linking depends on the amount enzyme employed as well as on the temperature at which the enzyme is applied. Preferably, the enzymatic cross-linking is performed at a temperature within the range of 25-65 °C, most preferably within the range of 35-60 °C.

In the present process transglutaminase is typically employed in an amount of between 0.01 and 50 units per gram of protein contained in the cheese milk. Most preferably, transglutaminase is employed in an amount of between 0.1 and 20 units per gram of protein contained in the cheese milk.

The edible compositions of the present invention are advantageously packaged in a transparent container such as a glass bottle or a glass jar. Naturally, the container may also be made of a transparent plastic such as polyethylene or polyethylene terephtalate.

The invention is further illustrated by means of the following examples.

### EXAMPLES

### Example 1

A shelf-stable acidified dressing comprising small cubes of cross-linked fetta cheese was prepared as follows:

Fetta cheese containing cross-linked cheese protein was prepared by adding 0.5 wt.% of transglutaminase (Activa™ MP, Ajinomoto Foods Deutschland) to 5 litres of full fat milk (T = 50 °C) and by keeping the milk at 50 °C for 2 hours whilst gently stirring the milk. Next, the milk is cooled down to 31 °C and starter culture (0.1g FD-DVS FRC-75 culture, Chr Hansen, Denmark, dispersed in 200 ml sterile milk) and 0.5 g CaCl₂.2H₂O are added. The milk is continuously stirred and one hour after the addition of the starter culture 0.5 ml of a chymosin solution (CHY-MAX, Chr Hansen, Denmark) is added. Stirring is continued for another 20 seconds to ensure a homogeneous distribution of the chymosin throughout the milk. After stirring the milk is stored under quiescent conditions for 45 minutes and a cheese curd is formed. The curd is cut and the curd pieces are gently stirred for 40 minutes. The curd pieces are collected in a cheese cloth and pressed in a cheese press during 24 hours. During pressing cheese whey is removed from the curd. The pressed cheese curd is cut into pieces of 10×4 ×1 cm³. Dry salt (NaCl) is rubbed into the curd pieces and the salted pieces are stored for 48 hours at 20 °C. The pieces are then added to 2 L brine solution (7% NaCl, 0.1% CaCl₂.2H₂O) and stored at 5 °C for at least 1 month. Before being applied in the dressing, the fetta cheese pieces so obtained were cut into cubes of 1x1x1 cm.

A dressing was prepared on the basis of the following recipe:

| | % by weight |
|---|---|
| Water | 33.2 |
| White vinegar (12% acetic acid) | 10.0 |
| Sucrose | 6.5 |
| Sodium chloride | 3.0 |
| Xanthan gum | 0.2 |
| Red bell pepper (diced ± 7 mm) | 8.5 |
| Yellow bell pepper (diced ± 7 mm) | 8,5 |
| Green olives (diced ± 5 mm) | 7.0 |
| Garlic (chopped ± 4 mm) | 3.0 |
| Capers (whole) | 5.0 |
| White onion (diced ± 5 mm) | 8.5 |
| Cross-linked fetta cheese chunks | 6.0 |
| Potassium sorbate | 0.1 |
| Flavours, colouring agents | 0.5 |
| TOTAL | 100.0 |

First, sorbate, flavours and colouring agent were added to the under continuous stirring water. Next, under stirring, a dry mix of the xanthan gum, sucrose and salt was added, followed by the addition of the vinegar. Subsequently, the vegetable components, which previously had been blanced, were added. Finally, the cheese chunks were added. The resulting mix was gently stirred to obtain a homogeneous suspension, following which it was filled in glass jars.

The product so obtained was found to be shelf stable under ambient conditions for several weeks. During this storage period the cheese chunks retained their integrity and also the texture and taste of these cubes did not change significantly.

## Claims

1. An edible composition comprising:
• at least 35 wt.% of an aqueous phase, said aqueous phase having a pH of less than 5.5;
• at least 0.5 wt.% of cheese chunks with a minimum weight of 0.1 g; and
• up to 60 wt.% of one or more additional ingredients;
• wherein the protein within the cheese chunks has been cross-linked.

2. Edible composition according to claim 1, wherein at least 0.01% of the protein within the cheese chunks has been cross-linked.

3. Edible composition according to claim 1 or 2, wherein the protein within the cheese chunks has been cross-linked by transglutaminase.

4. Edible composition according to any one of the preceding claims, comprising 3-50 wt.% of the cheese chunks.

5. Edible composition according to any one of the preceding claims, wherein the continuous aqueous phase of the composition has a pH in the range of 3.0-5.0.

6. Edible composition according to any one of the preceding claims, wherein the edible composition is selected from the group consisting of dressings, sauces, soups and condiments.

7. Edible composition according to any one of the preceding claims, wherein the continuous aqueous phase of the composition has a transmission of at least 70% using the methodology defined in the description.

8. Edible composition according to any one of the preceding claims, wherein the composition comprises 0-5 wt.% of a dispersed fat phase.

9. Edible composition according to any one of the preceding claims, wherein the aqueous phase of the edible composition, the cheese chunks, oil, spices, herbs, vegetables and meat products together represent at least 90 wt.% of the composition.

10. Edible composition according to any one of the preceding claims, wherein the cheese chunks have a weight in the range of 0.2-5g.

11. Edible composition according to any one of the preceding claims, wherein the cheese chunks are chunks of a cheese selected from the group consisting of fetta cheese, Parmesan, Romano, Mozzarella, Emmenthaler, Gouda, processed cheese and combinations thereof.

12. Edible composition according to any one of the preceding claims, wherein the complete composition has not been pasteurised or heat sterilised.

13. A process for the manufacture of an edible composition according to any one of the preceding claims, said process comprising the steps of:
• combining cheese milk with tranglutaminase;
• curdling the transglutaminase containing cheese milk;
• removing the curd;
• producing a cheese product from the removed curd;
• dividing the cheese product into cheese chunks;
• combining the cheese chunks with an aqueous composition and, if the pH of the resulting product is 5.5 or higher, adjusting the pH to less than 5.5; and
packaging the resulting edible composition in a sealed container.

14. Process according to claim 13, wherein the time period between the addition of the transglutaminase and the removal of the curd exceeds 30 minutes.

15. Process according to claim 13 or 14, wherein transglutaminase is employed in an amount of between 0.01 and 50 units per gram of protein contained in the cheese milk.
